# EUROPÄISCHE PATENTSCHRIFT

(11) **EP 3 746 314 B1**
(45) Veröffentlichungstag und Bekanntmachung des Hinweises auf die Patenterteilung: **29.12.2021**
(21) Anmeldenummer: 19701028.3
(22) Anmeldetag: 03.01.2019
(51) Int. Cl.: B60C 11/16

(54) **SPIKE UND FAHRZEUGLUFTREIFEN MIT SPIKES**
SPIKE AND PNEUMATIC TIRE WITH SPIKES
CRAMPON ET PNEUMATIC AVEC DES CRAMPONS

(30) Priorität: 02.02.2018 DE 102018201611
(43) Veröffentlichungstag der Anmeldung: 09.12.2020
(73) Patentinhaber: Continental Reifen Deutschland GmbH, 30165 Hannover (DE)
(72) Erfinder: SCHLITTENHARD, Jan, 30419 Hannover (DE); KÖTTER, Maik, 30419 Hannover (DE); SPECHTMEYER, Torben, 30419 Hannover (DE)
(74) Vertreter: Continental Corporation
(86) Internationale Anmeldenummer: PCT/EP2019/050053
(87) Internationale Veröffentlichungsnummer: WO 2019/149461

(56) Entgegenhaltungen:
- WO-A1-99/52721
- WO-A1-2017/088995

## Beschreibung

Die Erfindung betrifft einen Spike zum Verankern in einem Spikeloch eines Laufstreifens eines Fahrzeugluftreifens mit einem einen Fußflansch aufweisenden Spikekörper aus einem nicht metallischen, elastischen Material, insbesondere einem Gummimaterial, und einem Spikepin aus Hartmetall, welcher in einem innerhalb des Spikekörpers befindlichen, einen Fußteil aufweisenden Einsatz verankert ist und mit einem Endabschnitt den Spikekörper überragt, wobei der Fußteil gemeinsam mit einer Umhüllungsschicht aus dem Material des Spikekörpers den Fußflansch des Spikekörpers bildet, und wobei der Fußflansch eine Außenkontur aufweist, welche bezüglich zumindest einer Symmetrieebene symmetrisch gestaltet ist und in Draufsicht zwei Längsseiten und zwei Schmalseiten aufweist.

Spikes werden üblicherweise durch eine Kombination aus Formschluss und Klemmung in den Spikelöchern des Laufstreifens von Fahrzeugluftreifen gehalten. Herkömmliche Spikes bestehen aus einem Spikekörper aus Aluminium oder Stahl, in welchem der über die Laufstreifenoberfläche hervorstehende Spikepin, der aus Hartmetall besteht, gehalten ist.

Es ist bereits vorgeschlagen worden, Spikes mit Spikekörpern aus Gummi oder aus Kunststoff zu verwenden. So ist beispielsweise aus der WO 2017/088995 A1 ein Spike der eingangs genannten Art bekannt, bei welchem der Spikepin und der aus Kunststoff oder Aluminium bestehende Einsatz in einen Gummimantel bzw. in Gummimaterial eingebettet sind. Die besonderen Vorteile dieser Ausführung liegen in den grundsätzlichen Materialeigenschaften des Gummikörpers. Durch seine geringe Dichte von etwa 1 g/cm³ ist Gummi im Vergleich zu Aluminium oder Stahl besonders leicht. Der Austausch von Aluminium oder Stahl durch Gummi als Körpermaterial führt daher zu einer Reduktion des Spikegewichtes, welches sich unter anderem positiv auf den Straßenverschleiß und auf die Feinstaubbildung auswirkt. Die elastischen Materialeigenschaften des Gummis haben jedoch noch weitere Vorteile. Zum einen dämpft das elastische Körpermaterial Stöße, sodass geringere Kräfte auf Steine in der Straßenoberfläche oder auf Streugutpartikel wirken. Auch dieser Effekt reduziert den Straßenverschleiß und die Feinstaubbildung. Darüber hinaus sind Spikekörper aus Gummi jenen aus Aluminium oder Stahl im Abriebverhalten überlegen, da sie ein komplett anderes Verschleißverhalten aufweisen. Da Steine im Straßenbelag und Split üblicherweise eine größere Härte als Aluminium oder sogar Stahl aufweisen, wird ein Spikekörper aus Aluminium oder Stahl stark abgeschliffen, wodurch sich die Spikekörperhöhe und der Durchmesser des Spikekörpers verringern. Dies führt dazu, dass die Kantenbereiche des Spikekörpers bei den Spikelöchern einem schneidenden Abrieb ausgesetzt werden, die Kantenbereiche erodieren, wodurch sich der Spalt zwischen dem Spike und der umliegenden Gummimatrix vergrößert. Dadurch wird das Eindringen von Sand und kleinen Steinchen, die den Spikekörperabrieb weiter beschleunigen, begünstigt. Spikekörper aus Gummi können ein ähnliches Abriebverhalten wie das Gummimaterial des Laufstreifens aufweisen, wodurch Spalten zwischen dem Spikekörper und dem Laufstreifenmaterial zumindest weitgehend nicht mehr auftreten. Die elastischen Eigenschaften von Gummi bewirken zudem eine sich auf die Dauerhaltbarkeit des Spikes günstig auswirkende Einbettung des Spikes im Gummimaterial des Laufstreifens.

Die WO 99/52721 A1 offenbart einen Spike mit einem einen Fußflansch aufweisenden Spikekörper und einem Spikepin aus Hartmetall, wobei der Fußflansch aus einem elastischen Material, beispielsweise aus Gummi, besteht.

Der Erfindung liegt die Aufgabe zugrunde, die eingangs erwähnten elastischen Eigenschaften des Materials des Spikekörpers zur Optimierung der Einbettungssteifigkeit des Spikes im Gummimaterial des Laufstreifens besser als bisher und insbesondere optimal auszunützen.

Gelöst wird die gestellte Aufgabe erfindungsgemäß dadurch, dass sich die Außenkontur des Fußteiles geometrisch von jener des Fußflansches unterscheidet, sodass die Umhüllungsschicht an der einen einer Längsseite und/oder einer Schmalseite zugeordneten Seite des Fußteiles zumindest einen Abschnitt aufweist, in welchem sie dicker ist als an der gegenüberliegenden Seite des Fußteiles.

Die Erfindung gestattet eine Optimierung der Eisperformance des Spikes durch eine gezielte Beeinflussung der Bettungssteifigkeit durch eine entsprechende Ausführung und Ausgestaltung des Fußteiles und des Fußflansches zur Bildung von Bereichen mit unterschiedlichen Schichtdicken der Umhüllungsschicht an einander gegenüberliegenden Seiten des Fußflansches. Die auf den Spikepin beim Bremsen, bei Traktion und bei Kurvenfahrt auf eisigem Untergrund ausgeübten Kräfte werden durch die Hebelwirkung besonders stark in den Fuß flansch übertragen. Eine dickere Umhüllungsschicht mit höherer Elastizität und besserem Dämpfungsverhalten wird daher an jenem Bereich der Fußflanschseite vorgesehen, wo eine weichere Bettung vorteilhaft ist. Eine dünnere, daher weniger elastische Umhüllungsschicht bewirkt eine steifere Einbettung der Spikes bei bestimmten Belastungen.

Bei einer bevorzugten Ausführung bildet der zumindest eine Abschnitt, in welchem die Umhüllungsschicht eine größere Dicke aufweist, ein Umhüllungsschichtpolster. Die Ausführung als Polster ist mit dem Vorteil eines weitgehend kontinuierlichen Überganges in die benachbarten Umhüllungsschichtabschnitte über dünner werdende Schichtdicken verbunden.

Besonders vorteilhaft ist ferner eine Ausbildung des Spikes, bei welchem der Fuß flansch in Draufsicht entlang seiner Längsseiten gerade verlaufende und entlang seiner Schmalseiten nach außen gebogen verlaufende Außenflächen aufweist. Dabei können die Längsseiten in Draufsicht gerade und insbesondere parallel zueinander verlaufen, die beiden Schmalseiten sind insbesondere bogenförmig nach außen gerundet ausgeführt und können auch übereinstimmend gestaltet sein. Die Längsseiten können ferner derart verlaufen, dass der Fußflansch an der einen Schmalseite eine größere Breite aufweist als an der anderen Schmalseite. Der Fußflansch weist daher insbesondere eine der üblichen und gleichmäßigen, in Draufsicht im Wesentlichen ovalen Formen auf, die eine gute Verankerung des Spikes in herkömmlichen Spikelöchern von Laufstreifen in Fahrzeugluftreifen gestatten.

Besonders vorteilhaft ist ferner eine Ausführung des Fußteiles des Einsatzes mit den Längs- und Schmalseiten des Fußflansches zugeordneten Längs- und Schmalseiten mit nach außen gerundeten Begrenzungsflächen an den Schmalseiten und mit entlang der einen Längsseite zwei zueinander unter einem stumpften Innenwinkel verlaufenden Begrenzungsflächen, sodass die Umhüllungsschicht zur Außenfläche des Fußflansches zwei, in Draufsicht vorzugsweise dreieckige Umhüllungsschichtpolster bildet. Der stumpfe Innenwinkel zwischen den Begrenzungsflächen beträgt insbesondere 150° bis 170°, die größte Dicke der Umhüllungsschichtpolster bei der bevorzugten Ausführung 0,35 mm bis 1,0 mm, insbesondere 0,7 mm bis 1,0 mm. Eine besonders vorteilhafte Bettungssteifigkeit eines auf diese Weise ausgeführten Spikes ergibt sich dann, wenn der Spike derart im Laufstreifen und in dessen Laufstreifenhälften positioniert wird, dass sich die die Längsseiten des Fußflansches in Umfangsrichtung erstrecken und sich die Umhüllungsschichtpolster im Fußflansch jeweils näher zum benachbarten Laufstreifenrand befinden. Erfolgt eine Belastung des Spikepins in axialer oder vorrangig in axialer Richtung zur nicht gepolsterten Fußflanschkante kann sich der Spike in diesem Bereich gut abstützen und Kräfte für eine gute Seitenführung können optimal übertragen werden. Erfolgt eine Belastung in die entgegengesetzte axiale Richtung, etwa durch Schlupfbewegungen beim Abplatten des Reifens, dann kommt die weichere Bettung des Spikes im Bereich der Umhüllungsschichtpolster zur Wirkung und der Spike kann in erwünschter Weise relativ weich nachgeben.

Bei einer Ausführung des Spikes mit zumindest einem Umhüllungsschichtpolster an einer Längsseite des Fußteiles bzw. des Fußflansches weist die Umhüllungsschicht in jenen Bereichen, wo kein Umhüllungsschichtpolster gebildet ist, eine Dicke auf, die geringer ist als die größte Dicke des bzw. der Umhüllungsschichtpolster.

Bei Ausführungen des Spikes mit zumindest einem Umhüllungsschichtpolster an der einen Längsseite des Fußteiles bzw. Fußflansches ist auch eine besondere Ausgestaltung des Spikepins bzw. seines den Spikekörper überragenden Endabschnittes und der dort an der Deckfläche ausgebildeten Griffkanten besonders vorteilhaft für einen optimalen Eisgriff. Der Endabschnitt des Spikepins ist quer zu den Längsseiten des Fußflansches und des Fußteiles langgestreckt und weist zwei sich in Richtung der Längsseiten erstreckende ungleich lange Griffkanten auf, wobei die längere Griffkante jene ist, die der Längsseite, an welche das/die Umhüllungsschichtpolster ausgebildet ist bzw. sind, näher liegt.

Bei einer weiteren vorteilhaften Ausgestaltung des Spikes weist der Fußteil den Längs- und Schmalseiten des Fußflansches zugeordnete Längs- und Schmalseiten mit nach außen gerundeten Begrenzungsflächen an den Schmalseiten auf, wobei zumindest eine dieser Begrenzungsflächen im Bereich ihres Rundungszentrums mit einem abgeflachten, in Draufsicht insbesondere gerade verlaufenden Abschnitt versehen ist, sodass die Umhüllungsschicht zur Außenfläche des Fußflansches ein Umhüllungsschichtpolster bildet.

Besonders bevorzugt ist dabei eine Ausführung des Spikes, bei welchem die Schmalseiten des Fußflansches und des Fußteils ungleich breit sind, wobei der Fußteil zumindest an seiner breiteren Schmalseite im Bereich des Rundungszentrums mit einem abgeflachten, in Draufsicht insbesondere gerade verlaufenden Abschnitt versehen ist, welcher vorzugsweise eine Länge von 2,0 mm bis 3,0 mm aufweist. Die größte Dicke dieses Umhüllungsschichtpolsters beträgt insbesondere 0,5 mm bis 1,0 mm, vorzugsweise 0,7 mm bis 1,0 mm. Dabei ist es von besonderem Vorteil, wenn solche Spikes im Laufstreifen derart positioniert sind, dass das Umhüllungsschichtpolster der Umfangsrichtung des Reifens zugeordnet bzw. zugewandt ist. Diese Spikeanordnung ist für die Bettungssteifigkeit bei unter Traktionsbelastungen und Bremsbelastungen auf eisigem Untergrund wirkenden Kräften besonders günstig.

Bei einer weiteren bevorzugten und vorteilhaften Ausführung des Spikes ist an jeder der nach außen gerundeten Begrenzungsflächen an den Schmalseiten im Bereich des Rundungszentrums ein abgeflachter, in Draufsicht gerade verlaufender Abschnitt vorgesehen, wobei das Umhüllungsschichtpolster an der Schmalseite mit der größeren Breite eine größere Dicke an seiner dicksten Stelle aufweist als das Umhüllungsschichtpolster an der Schmalseite mit der geringeren Breite. Auf diese Weise kann gezielt auf die Bettungssteifigkeit bei Brems- und Traktionsbelastungen Einfluss genommen werden.

Bei einer weiteren vorteilhaften Ausgestaltung dieses Spikes ist vorgesehen, dass der Fußteil an seinen Längsseiten konkav nach innen gebogen verlaufende Begrenzungsflächen aufweist, wobei die Umhüllungsschicht an diesen Begrenzungsflächen bevorzugt derart ausgebildet ist, dass sie in Draufsicht gerade verlaufende Außenflächen und eine entsprechend variierende Schichtdicke von insbesondere 0,2 mm bis 0,4 mm aufweist. Die Schichtdicke ist daher entlang dieser Begrenzungsflächen geringer als im Bereich von Umhüllungsschichtpolster an den Schmalseiten. Im mittleren Bereich dieser Begrenzungsflächen ist die Schichtdicke in Folge der konkaven Ausführung der Begrenzungsflächen am größten und kann daher ebenfalls die Bettungssteifigkeit des Spikes beeinflussen.

Bei dieser Spikeausgestaltung ist für eine gute Eisperformance eine besondere Ausgestaltung des Spikepins bzw. seiner Griffkanten an seiner äußeren Deckfläche von besonderem Vorteil. Bei dieser Ausgestaltung ist der Endabschnitt des Spikepins in Draufsicht quer zu den Längsseiten des Fußflansches und des Fußteiles langgestreckt und weist zu den Schmalseiten des Fußteiles ungleich lange Griffkanten auf, wobei die kürzere Griffkante jene ist, die dem Umhüllungsschichtpolster an der Schmalseite bzw., falls an beiden Schmalseiten Umhüllungsschichtpolster ausgebildet sind, dem jeweils dickeren Umhüllungsschichtpolster näher liegt.

Die Erfindung betrifft ferner einen Fahrzeugluftreifen mit einem Laufstreifen mit erfindungsgemäß ausgeführten Spikes, wobei die Spikes derart im Laufstreifen positioniert sind, dass ihre längere Erstreckung der Umfangsrichtung oder im Wesentlichen der Umfangsrichtung zugeordnet ist. Dabei ist auch eine Anordnung besonders vorteilhaft, bei der die Spikes in über den Umfang verlaufenden Spikespuren angeordnet sind und in jeder Spikespur sich jeweils Spikes mit an den Schmalseiten ausgebildeten und Spikes mit an den Längsseiten ausgebildeten Umhüllungsschichtpolstern befinden. Besonders günstig ist ferner eine Anordnung der Spikes im Laufstreifen derart, dass sich im mittleren Bereich des Laufstreifens vorrangig oder ausschließlich Spikes mit Umhüllungsschichtpolstern an den Schmalseiten und in den seitlichen Bereichen des Laufstreifens vorrangig oder ausschließlich Spikes befinden, bei welchen die Umhüllungsschichtpolster an den Längsseiten ausgebildet sind.

Weitere Merkmale, Vorteile und Einzelheiten der Erfindung werden nun anhand der Zeichnung, die Ausführungsbeispiele darstellt, näher beschrieben. Dabei zeigen
Fig. 1 und Fig. 2 Seitenansichten einer ersten Ausführungsform eines Spikes gemäß der Erfindung,
Fig. 3 eine Schrägansicht des Spikes gemäß Fig. 1 und Fig. 2,
Fig. 4 eine Draufsicht auf den Spike gemäß der ersten Ausführungsform,
Fig. 5 eine Schnittdarstellung entlang der durch die Linie V-V in Fig. 4 gekennzeichneten Schnittebene,
Fig. 6 eine Schnittdarstellung entlang der durch die Linie VI-VI in Fig. 4 gekennzeichneten Schnittebene,
Fig. 7 eine Schnittdarstellung entlang der durch die Linie VII-VII in Fig. 1 gekennzeichneten Schnittebene,
Fig. 8 und Fig. 9 Seitenansichten einer zweiten Ausführungsform eines Spikes gemäß der Erfindung,
Fig. 10 eine Schrägansicht des Spikes gemäß Fig. 8 und Fig. 9,
Fig. 11 eine Draufsicht auf den Spike gemäß der zweiten Ausführungsform,
Fig. 12 eine Schnittdarstellung entlang der durch die Linie XII-XII in Fig. 11 gekennzeichneten Schnittebene,
Fig. 13 eine Schnittdarstellung entlang der durch die Linie XIII-XIII in Fig. 11 gekennzeichneten Schnittebene,
Fig. 14 eine Schnittdarstellung entlang der durch die Linie XIV-XIV in Fig. 1 gekennzeichneten Schnittebene und
Fig. 15 eine Draufsicht auf einen Umfangsabschnitt eines Laufstreifens eines Fahrzeugluftreifens mit einer Ausführungsvariante der Anordnung der Spikes.

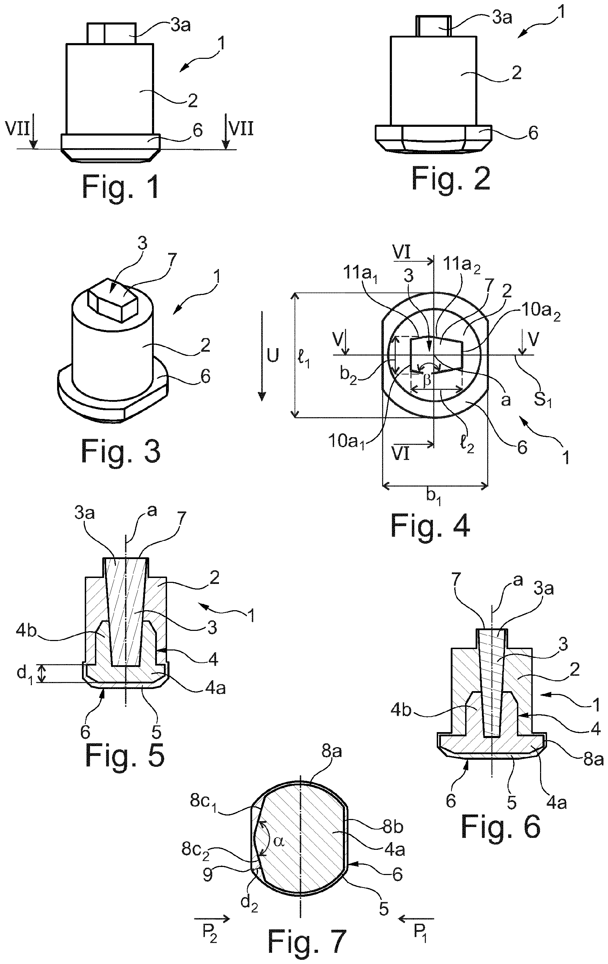

Die Figuren 1 bis 14 zeigten vereinfachte Darstellungen von Spikes 1, 1' gemäß der Erfindung. In der nachfolgenden Beschreibung verwendete Begriffe wie senkrecht, oben, unten und dergleichen beziehen sich auf die Darstellungen der Spikes 1, 1' in den Figuren.

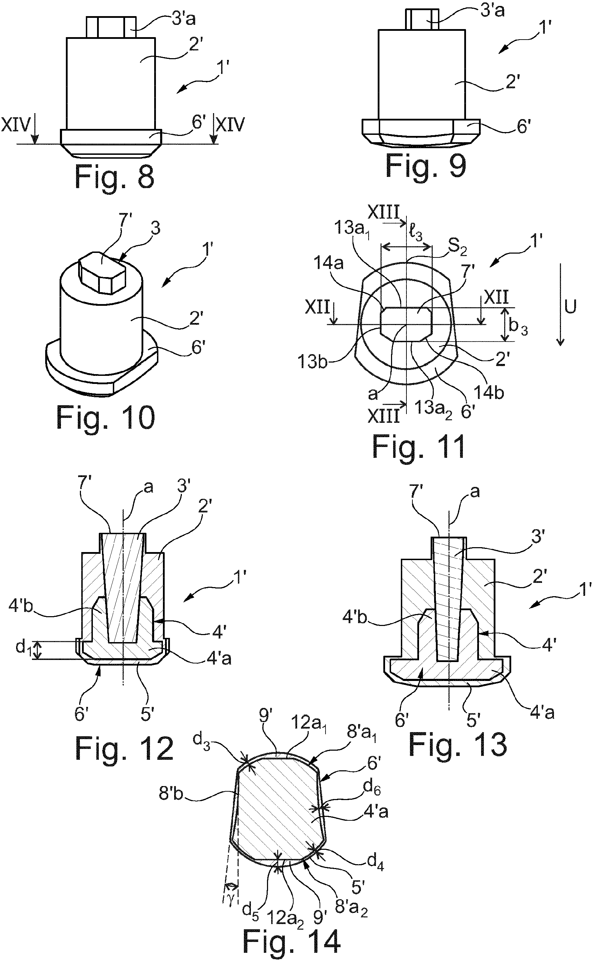

Die in den Figuren gezeigten Spikes 1 (Fig. 1 bis Fig. 7) und 1' (Fig. 8 bis Fig. 14) bestehen grundsätzlich aus einem Spikekörper 2 (Fig. 1 bis Fig. 7) und 2' (Fig. 8 bis Fig. 14) und einem Spikepin 3 (Fig. 1 bis Fig. 7) und 3' (Fig. 8 bis Fig. 14). Im Spikekörper 2, 2' ist ein Einsatz 4, 4' enthalten, welcher einen Fußteil 4a, 4'a und einen Pinhalter 4b, 4'b aufweist, in dessen Mitte jeweils der Spikepin 3, 3' verankert ist, welcher mit einem Endabschnitt 3a, 3'a den Spikekörper 2, 2' überragt. Die Spikes 1, 1' weisen vertikal verlaufende zentrale Hochachsen a (Fig. 5, 6; Fig. 12, 13) auf, auf welchen sich der nicht bezeichnete Massenschwerpunkt der Spikes 1,1' befindet.

Der Einsatz 4, 4' besteht aus Kunststoff, insbesondere aus einem duroplastischen oder thermoplastischen Kunststoff, oder aus Metall, insbesondere aus Aluminium. Der bei den gezeigten Ausführungen beispielhaft blockförmig gestaltete Pinhalter 4b, 4'b, erstreckt sich bis in den mittleren Bereich des Spikekörpers 2, 2'. Der Fußteil 4a, 4'a des Einsatzes 4 ist ein den Pinhalter 4b, 4'b vorzugsweise an allen Seiten überragender Bauteil, dessen größte Dicke d₁ (Fig. 5, Fig. 12) in der Größenordnung von 1,0 mm bis 1,4 mm beträgt.

Der Spikekörper 2, 2' weist einen Fußflansch 6, 6' auf, welcher aus dem Fußteil 4a, 4'a des Einsatzes 4, 4' und einer den Fußteil 4a, 4'a umgebenden Umhüllungsschicht 5, 5' besteht, sodass der Fußteil 4a, 4'a in das Material des Spikekörpers 2, 2' eingebettet ist. Abgesehen vom Fußflansch 6, 6' ist der Spikekörper 2, 2' bei den dargestellten vereinfachten Ausführungen ein zylindrischer Bauteil. Der Spikekörper 2, 2' kann jedoch auch eine andere äußere Gestalt aufweisen, beispielsweise kegelstumpfförmig oder auf andere Weise konisch gestaltet sein.

Der Spikekörper 2, 2' besteht aus einem nichtmetallischen, elastischen Material, vorzugsweise einem Gummimaterial, insbesondere einem schnitt- und abriebbeständigen Gummimaterial. Alternativ besteht der Spikekörper 2, 2' aus einem thermoplastischen Vulkanisat mit ähnlichen Eigenschaften wie Gummimaterialien. Mischungszusammensetzungen zur Herstellung geeigneter Gummimaterialien sowie geeigneter thermoplastischer Vulkanisate sind dem Reifenfachmann hinlänglich bekannt. Das Material des Spikekörpers 2, 2' umhüllt ferner den Endabschnitt 3a, 3'a des Spikepins 3, 3', gegebenenfalls mit oder ohne Bedeckung der Deckfläche 7, 7' des Endabschnittes 3a, 3'a.

Der Spikepin 3, 3' besteht insbesondere aus einem Hartmetall und ist ein stiftartig gestalteter, über seine Länge sich konisch verjüngender Bauteil, welcher mit seinem verjüngten Endabschnitt im Pinhalter 4b, 4'b fest verankert ist. Die Querschnittsfläche des Spikepins 3, 3' wird durch die Verjüngung des Spikepins 3, 3' entlang der Längserstreckung des Spikepins 3, 3' kontinuierlich kleiner, bleibt jedoch bei der bevorzugten Ausgestaltung des Spikepins 3, 3' geometrisch gleichartig erhalten.

Bei der in Fig. 1 bis Fig. 7 gezeigten Ausführung ist der Fußteil 4a des Einsatzes 4 ein länglich ovaler Bauteil mit in Draufsicht gleich breiten Schmalseiten und mit zwei unterschiedlich gestalteten Längsseiten. Wie insbesondere Fig. 7 zeigt, befinden sich an den Schmalseiten bogenförmig nach außen gerundete Begrenzungsflächen 8a, wobei an der einen Längsseite die Begrenzungsflächen 8a durch eine gerade verlaufende Begrenzungsfläche 8b und an der anderen Längsseite durch zwei zueinander unter einem stumpfen Innenwinkel α verlaufende Begrenzungsflächen 8c₁ und 8c₂ miteinander verbunden sind. Der stumpfe Winkel α beträgt in der Größenordnung von 150° bis 170°. Die beiden Begrenzungsflächen 8c₁ und 8c₂ weisen vorzugsweise übereinstimmende Längen auf, ihr Übergangsbereich ineinander ist im gezeigten Ausführungsbeispiel gerundet.

Die Umhüllungsschicht 5 umgibt den Fußteil 4a entlang der Begrenzungsflächen 8a und 8b mit einer jeweils konstanten oder nahezu konstanten Dicke in der Größenordnung von 0,2 mm bis 0,30 mm. Entlang der Begrenzungsflächen 8c₁ und 8c₂ weist die Umhüllungsschicht 5 eine Außenfläche auf, welche parallel zu der am gegenüberliegenden Bereich der Umhüllungsschicht 5 entlang der Begrenzungsfläche 8b verlaufenden Außenfläche verläuft, sodass entlang der Begrenzungsflächen 8c₁ und 8c₂ in Draufsicht (Fig. 7) bzw. im Querschnitt dreieckförmige und gegenüber der sonstigen Schichtdicke der Umhüllungsschicht 5 verdickte Umhüllungsschichtpolster 9 vorliegen. Die Dicke d₂ dieser Umhüllungsschichtpolster 9 beträgt an ihrer dicksten Stelle in der Größenordnung von 0,35 mm bis 1,0 mm, insbesondere mindestens 0,7 mm. Im Bereich der Übergangsrundung zwischen den Begrenzungsflächen 8c₁ und 8c₂ befindet sich lediglich eine sehr dünne Gummischicht mit einer Dicke in der Größenordnung von 0,1 mm bis 0,15 mm.

Bei der bevorzugten Ausführung beträgt die Breite b₁ des Fußflansches 6 in der Größenordnung von 6,5 mm bis 7,0 mm, insbesondere 6,7 mm, seine größte Länge 1₁ 7,7 mm bis 8,3 mm, insbesondere 8,0 mm. In Folge der Ausgestaltung des Fußteiles 4a weist der Spike 1 eine einzige, durch die Hochachse a gehende und im rechten Winkel zu den Längsseiten des Fußflansches 6 verlaufende Symmetrieebene, welche in Fig. 4 durch die Linie S₁ versinnbildlicht ist, auf.

Der Spikepin 3 ist bei der dargestellten und bevorzugten Ausführung ebenfalls nur bezüglich der Symmetrieebene S₁ symmetrisch gestaltet. Von Bedeutung für den Eisgriff ist die Ausgestaltung der äußeren Deckfläche 7 am Endabschnitt 3a des Spikepins 3. Die Deckfläche 7 weist entlang der Symmetrieebene S₁ ihre größte Erstreckungslänge auf, sodass der Spikepin 3 in Draufsicht entlang der Symmetrieebene S₁ langgestreckt ist. Die Länge 1₂ (Fig. 4) der Deckfläche 7 beträgt 2,7 mm bis 3,2 mm, ihre größte Breite b₂ 2,0 mm bis 2,3 mm. Die Deckfläche 7 weist somit an ihren in Längserstreckung befindlichen Schmalseiten je eine im rechten Winkel zur Symmetrieebene S₁ verlaufende Griffkante 10a₁, 10a₂ auf, wobei die Griffkante 10a₁ länger ist als die Griffkante 10a₂. Die Länge der Griffkante 10a₁ beträgt 1,6 mm bis 2,2 mm, die Länge der Griffkante 10a₂ ist um 0,2 mm bis 0,5 mm kleiner. Der Spikepin 3 ist derart im Pinhalter 4b verankert, dass die längere Griffkante 10a₁ jene ist, die den Begrenzungsflächen 8c₁ und 8c₂ des Fußteiles 4a des Einsatzes 4 näherliegt.

Die beiden Griffkanten 10a₁, 10a₂ sind bei der gezeigten Ausführung jeweils durch zwei gleich gestaltete und unter einem stumpfen Innenwinkel β in der Größenordnung von vorzugsweise 160° bis 170°zueinander verlaufende Griffkanten 11a₁ und 11a₂ miteinander verbunden. Bei der gezeigten Ausführung ist ferner die unmittelbar an die Griffkante 10a₁ anschließenden Griffkante 11a₁ kürzer als die Griffkanten 11a₂. Bei alternativen, gesondert nicht dargestellten Ausführungsformen sind die Griffkanten 10a₁, 10a₂ jeweils durch eine einzige gerade oder durch eine bogenförmig nach außen verlaufende Griffkante miteinander verbunden. Die Griffkanten 10a₁, 10a₂, 11a₁ und 11a₂ gehen entlang des Spikepins 3 in diesen entsprechend begrenzende Seitenflächen über.

Die spezielle Ausgestaltung des Fußteiles 4a des Einsatzes 4 erleichtert es, den Einsatz 4 mit dem Spikepin 3 mit richtiger Orientierung in die Form zum Umspritzen mit dem Material des Spikekörpers 2 einzusetzen.

Für die Eigenschaften des Spikes 1 ist die spezielle Ausgestaltung des Fußflansches 6 mit Umhüllungsschichtpolstern 9 von Bedeutung, die eine Beeinflussung und Optimierung der Bettungssteifigkeit des im Laufstreifen eingesetzten Spikes 1 gestatten. Der Spike 1 wird, wie es beispielsweise bei Fig. 4 mit dem Pfeil U angedeutet ist, im Laufstreifen vorzugsweise mit seiner längeren Erstreckung des Fußflansches 6 parallel oder annähernd parallel - mit einer Abweichung von bis zu ca. 15° - zur Umfangsrichtung des Laufstreifens positioniert und in den Laufstreifenhälften ferner derart, dass sich die Umhüllungsschichtpolster 9 im Fuß flansch 6 jeweils näher zum benachbarten Laufstreifenrand befinden, sodass je nach der vorrangig wirkenden Belastungsrichtung eine unterschiedliche Bettungssteifigkeit des Spikes 1 resultiert. Erfolgt nun eine Belastung des Spikepins 3 in axialer oder vorrangig in axialer Richtung, wie es in Fig. 7 durch den Pfeil P₁ angedeutet ist, dann stützt sich der Spike 1 im Bereich der nicht gepolsterten Fußflanschkante ab. Kräfte für eine gute Seitenführung können somit optimal übertragen werden. Erfolgt eine Belastung aus der Richtung des Pfeiles P₂, etwa durch Schlupfbewegungen beim Abplatten des Reifens, dann kommt die weichere Bettung des Spikes 1 im Bereich der Umhüllungsschichtpolster 9 zur Wirkung und der Spike 1 kann in erwünschter Weise relativ weich nachgeben.

Bei der in Fig. 8 bis Fig. 14 gezeigten Ausführung ist der Fußteil 4'a des Einsatzes 4' ebenfalls ein länglich ovaler Bauteil, jedoch mit in Draufsicht ungleich breiten Schmalseiten und mit gleich gestalteten Längsseiten (Fig. 14). Der Spike 1' ist bezüglich einer in der Längserstreckung des Fußflansches 4'a durch die Hochachse a verlaufenden Symmetrieebene S₂ (Fig. 11) symmetrisch gestaltet. An den Schmalseiten des Fußteiles 4'a befinden sich bogenförmig nach außen gerundete Begrenzungsflächen 8'a₁ und 8'a₂. An den Längsseiten befinden sich konkav nach innen gebogen verlaufende Begrenzungsflächen 8'b. Die Enden der Begrenzungsflächen 8'b verbindende Gerade verlaufen jeweils unter einem spitzen Winkel γ in der Größenordnung von 5° bis 20° zur Symmetrieebene S₂ derart, dass ihr gegenseitiger Abstand an ihren Enden zur Begrenzungsfläche 8'a₁ kleiner ist, als ihr gegenseitiger Abstand an ihren Enden bei der Begrenzungsfläche 8'a₂. Die Begrenzungsflächen 8'a₁ und 8'a₂ sind jeweils im Bereich ihrer Rundungszentren mit einem abgeflachten, in Draufsicht gerade verlaufenden Abschnitt 12a₁ und 12a₂ versehen. Diese Abschnitte 12a₁ und 12a₂ verlaufen im rechten Winkel zur Symmetrieebene S₂. Der Abschnitt 12a₁ ist um 0,3 mm bis 0,8 mm kürzer als der Abschnitt 12a₂, dessen Länge in der Größenordnung von 2,0 mm bis 3,0 mm beträgt. Die Umhüllungsschicht 5' umgibt die Begrenzungsflächen 8'a₁ und 8'a₂ gleichmäßig und jeweils insgesamt nach außen gerundet und zu den gerundeten Abschnitten der Begrenzungsflächen 8'a₁ und 8'a₂ mit konstanter oder im Wesentlichen konstanter Schichtdicke d₃, d₄. Die Schichtdicke d₃ der Umhüllungsschicht 5' entlang den gerundeten Abschnitten der kürzeren Begrenzungsfläche 8'a₁ kann jedoch auch geringer sein als jene entlang den gerundeten Abschnitten der längeren Begrenzungsfläche 8'a₂. In jedem Fall wird entlang des abgeflachten Abschnittes 12a₂ an der längeren Begrenzungsfläche 8'a₂ ein größeres und dickeres Umhüllungsschichtpolster 9' gebildet ist als entlang des Abschnittes 12a₁ an der Begrenzungsfläche 8'a₁. Die Dicke d₅ dieses Umhüllungsschichtpolsters 9' beim abgeflachten Abschnittes 12a₂ beträgt 0,5 mm bis 1,0 mm. Entlang der konkav nach innen gebogen verlaufenden Begrenzungsflächen 8'b des Fußteiles 4'a wird die Umhüllungsschicht 5' vorzugsweise mit einer ebenen Außenfläche und daher mit entsprechend variierender Schichtdicke d₆ von 0,2 mm bis 0,4 mm ausgebildet.

Der in der Mitte des Spikes 1' entlang der Hochachse a positionierte Spikepin 3' weist eine Deckfläche 7' auf, welche annähernd die Gestalt eines länglichen Viereckes mit abgeschrägten Ecken und einer Länge l₃ von 2,8 mm bis 3,2 mm und einer Breite b₃ von 1,8 mm bis 2,0 mm, wobei der Spikepin 3' im Einsatz 4' derart verankert ist, dass er sich im rechten Winkel zur Symmetrieebene S₂ erstreckt und somit gegenüber dieser symmetrisch ausgeführt ist. Die Deckfläche 7' besitzt daher zwei längere, im rechten Winkel zur Symmetrieebene S₂ verlaufende Griffkanten 13a₁ und 13a₂ und ferner zwei kürzere, parallel zur Symmetrieebene S₂ verlaufende gleichlange Griffkanten 13b. Die Griffkanten 13b weisen insbesondere eine Erstreckungslänge von 1,0 mm bis 1,7 mm, die Griffkante 13a₁ eine Länge von 2,3 mm bis 3,2 mm und die Griffkante 13a₂ weist eine Länge auf, die um bis zu 1,2 mm geringer ist als die Länge der Griffkante 13a₁. Eckkanten 14a verbinden die Griffkante 13a₁ mit den Griffkanten 13b, Eckkanten 14b die Griffkante 13a₂ mit den Griffkanten 13b. Entlang der Erstreckung des Spikepins 3' schließen von den Griffkanten 13a₁, 13a₂, 13b und den Eckkanten 14a, 14b ausgehende, entsprechend gestaltete Seitenflächen an, die nicht bezeichnet sind, an. Anstelle von Eckkanten und zugehörigen Eckflächen kann der Spikepin 3' Übergangsrundungen und gerundete Übergangsflächen aufweisen.

Der Spike 1' ist ein sogenannter Traktions- und Bremsspike, welcher vorzugsweise in sämtlichen Spikespuren eines Laufstreifens, insbesondere in Kombination mit Spikes 1, vorgesehen wird. Bei Laufstreifen, die nicht laufrichtungsgebunden ausgeführt sind, wird etwa die Hälfte der im Laufstreifen vorgesehenen Spikes 1' - entsprechend über den Umfang verteilt - mit einer Orientierung zur Umfangsrichtung (Pfeil U bei Fig. 11) - wie in den Figuren dargestellt angeordnet, die zweite Hälfte der vorgesehenen Spikes 1' mit entgegengesetzter Orientierung. Besonders vorteilhaft ist jedoch die Anordnung der Spikes 1' in Laufstreifen von Reifen mit einer vorgegebenen Drehrichtung bei Vorwärtsfahrt, also in Reifen mit einem Laufstreifen, der laufrichtungsgebunden ausgestaltet ist. Dabei erfolgt die Anordnung der Spikes 1' derart, dass die breitere Seite der Fußflansche 6' beim Abrollen des Reifens bei Vorwärtsfahrt in die Abrollrichtung zeigt, wie es in Fig. 11 mit dem Pfeil U angedeutet ist. Eine derartige Anordnung der Spikes 1' ist für die Bettungssteifigkeit bei unter Traktionsbelastungen und Bremsbelastungen auf eisigem Untergrund wirkenden Kräften besonders vorteilhaft.

Bei Traktion dringt der Spikepin 3' des Spikes 1' mit seiner kürzeren Griffkante 13a₂ leicht in die Eisoberfläche ein und beginnt mit der Kraftübertragung, dabei wird er verkippt und stützt sich steif auf dem schmäleren Umhüllungsschichtpolster 9' ab. Das vordere, dickere Umhüllungsschichtpolster 9' erleichtert die Spikeverkippung, weil das elastische Gummimaterial eine geringere Steifigkeit als das Kunststoff- oder Aluminiummaterial des Fußteiles 4'a aufweist. Dadurch kann sich der Spike 1' leicht "aufstellen", um einen höheren Überstand auszubilden und um schneller den optimalen Fräswinkel einzunehmen.

Bei der Bremskraftübertragung dringt der Spikepin 3' auch zunächst mit seiner kürzeren Griffkante 13a₂ ins Eis ein, wird jedoch dann durch die Relativbewegung zwischen Reifen und Straßenoberfläche "umgekippt" und überträgt nun die Bremskräfte mit seiner längeren Griffkante 13a₁. Beim "Umkippen" des Spikes wird der Spikepin 3' quasi automatisch ins Eis gedrückt. Zur Maximierung der Bremskräfte ist es besonders wichtig, dass der Spike 1' weich gebettet ist, damit Spannungsspitzen abgebaut werden und so ein vorzeitiger Eisbruch verhindert wird. Die weiche Bettung erfolgt über das dickere, elastische Umhüllungsschichtpolster 9' am Fußflansch 6'.

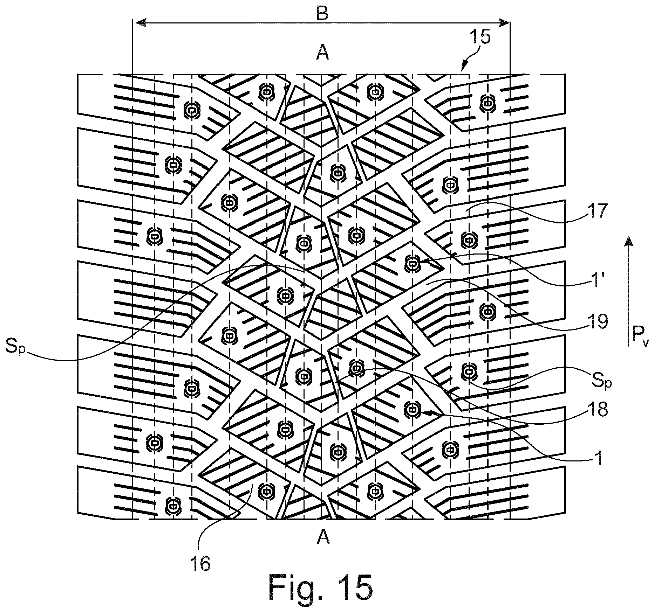

Fig. 15 zeigt schematisch einen Umfangsabschnitt eines Laufstreifens für einen PKW-Winterreifen mit einem drehrichtungsgebundenen Profil. Der beispielhaft gezeigte Laufstreifen weist zwei schulterseitige Profilblockreihen 15 und zwischen diesen im mittleren Laufstreifenbereich weitere Profilblöcke 16, die durch V-förmig über die Breite des Laufstreifens verlaufende Querrillen 17 und eine Anzahl von Umfangsrillen 18 und Schrägrillen 19 gebildet sind, auf. Die Drehrichtung bei Vorwärtsfahrt ist durch einen Pfeil Pᵥ gekennzeichnet. B bezeichnet die Breite des bodenberührenden Teils des Laufstreifens. Innerhalb dieser Breite B sind Spikes 1, 1' in sogenannten Spikespuren S_{P}, deren Anzahl üblicherweise zwischen 4 und 25, insbesondere 12 und 20 beträgt, angeordnet. Spikespuren S_{P} sind parallel zur Umfangsrichtung kreisförmig umlaufende Linien und in Fig. 15 als gestrichelte Linien versinnbildlicht. Bei der in Fig. 15 gezeigten Ausführung sind pro Laufstreifenhälfte sieben Spikespuren S_{P} vorgesehen, deren Anordnung bezüglich des Reifenäquators A-A symmetrisch erfolgt.

Im gezeigten Umfangsabschnitt ist beispielhaft in jeder Spikespur zumindest ein Spike 1 und zumindest ein Spike 1' eingezeichnet. Üblicherweise sind pro Spikespur S_{P} über den Umfang des Reifens 4 bis 25, insbesondere 7 bis 16, Spikes 1,1' positioniert. Bei einer alternativen Ausführung sind in den Spikespuren S_{P} in den beiden seitlichen Umfangsbereichen ausschließlich Spikes 1 und in den Spikespuren S_{P} im mittleren Umfangsbereich ausschließlich Spikes 1' positioniert.

### Bezugsziffernliste

- 1, 1': Spike
- 2, 2': Spikekörper
- 3, 3': Spikepin
- 3a, 3a': Endabschnitt
- 4, 4': Einsatz
- 4a, 4'a: Fußteil
- 4b, 4'b: Pinhalter
- 5, 5': Umhüllungsschicht
- 6, 6': Fußflansch
- 7, 7': Deckfläche
- 8a, 8b: Begrenzungsfläche
- 8'a₁, 8'a₂: Begrenzungsfläche
- 8'b: Begrenzungsfläche
- 8c₁, 8c₂: Begrenzungsfläche
- 9, 9': Umhüllungsschichtpolster
- 10a₁, 10a₂: Griffkante
- 11a₁, 11a₂: Griffkante
- 12a₁, 12a₂: Abschnitt
- 13a₁, 13a₂: Griffkante
- 13b: Griffkante
- 14a, 14b: Eckkante
- 15: Profilblockreihe
- 16: Profilblock
- 17: Querrille
- 18: Umfangsrille
- 19: Schrägrille
- α, β, γ: Winkel
- A-A: Reifenäquator
- a: Hochachse
- B: Breite
- b₁, b₂, b₃: Breite
- l₁, l₂, l₃: Länge
- d₁, d₂: Dicke
- d₃, d₄, d₅, d₆: Dicke
- P₁, P₂: Pfeil
- P_{V}: Pfeil
- S₁, S₂: Symmetrieebene
- S_{P}: Spikespur
- U: Pfeil

## Patentansprüche

1. Spike (1, 1') zum Verankern in einem Spikeloch eines Laufstreifens eines Fahrzeugluftreifens mit einem einen Fußflansch (6, 6') aufweisenden Spikekörper (2, 2') aus einem nicht metallischen, elastischen Material, insbesondere einem Gummimaterial, und einem Spikepin (3, 3') aus Hartmetall, welcher in einem innerhalb des Spikekörpers (2, 2') befindlichen, einen Fußteil (4a, 4'a) aufweisenden Einsatz (4, 4') verankert ist und mit einem Endabschnitt (3a, 3'a) den Spikekörper (2, 2') überragt, wobei der Fußteil (4a, 4'a) gemeinsam mit einer Umhüllungsschicht (5, 5') aus dem Material des Spikekörpers (2, 2') den Fußflansch (6, 6') des Spikekörpers (2, 2') bildet, und wobei der Fußflansch (6, 6') eine Außenkontur aufweist, welche bezüglich zumindest einer Symmetrieebene (S₁, S₂) symmetrisch gestaltet ist und in Draufsicht zwei Längsseiten und zwei Schmalseiten aufweist,
**dadurch gekennzeichnet,**
**dass** sich die Außenkontur des Fußteiles (4a, 4'a) geometrisch von jener des Fußflansches (6, 6') unterscheidet, sodass die Umhüllungsschicht (5, 5') an der einen einer Längsseite und/oder einer Schmalseite zugeordneten Seite des Fußteiles (4a, 4'a) zumindest einen Abschnitt aufweist, in welchem sie dicker ist als an der gegenüberliegenden Seite des Fußteiles (4a, 4'a).

2. Spike (1, 1') nach Anspruch 1, **dadurch gekennzeichnet, dass** der Abschnitt, in welchem die Umhüllungsschicht (5, 5') eine größere Dicke aufweist, ein Umhüllungsschichtpolster (9, 9') bildet.

3. Spike (1, 1') nach Anspruch 1 oder 2, **dadurch gekennzeichnet, dass** der Fußflansch (6, 6') in Draufsicht entlang seinen Längsseiten gerade verlaufende und entlang seiner Schmalseiten nach außen gebogen verlaufende Außenflächen aufweist.

4. Spike (1) nach einem der Ansprüche 1 bis 3, **dadurch gekennzeichnet, dass** der Fußteil (4a) den Längs- und Schmalseiten des Fußflansches (6) zugeordnete Längs- und Schmalseiten mit nach außen gerundeten Begrenzungsflächen (8a) an den Schmalseiten und entlang der einen Längsseite zwei zueinander unter einem stumpfen Innenwinkel (a) verlaufende Begrenzungsflächen (8c₁, 8c₂) aufweist, sodass die Umhüllungsschicht (5) zur Außenfläche des Fußflansches (6) zwei, in Draufsicht vorzugsweise dreieckige Umhüllungsschichtpolster (9) bildet.

5. Spike (1) nach Anspruch 4, **dadurch gekennzeichnet, dass** der stumpfe Innenwinkel (a) zwischen den Begrenzungsflächen (8c₁, 8c₂)150° bis 170 ° beträgt.

6. Spike (1) nach Anspruch 4, **dadurch gekennzeichnet, dass** die Umhüllungsschichtpolster (9) eine größte Dicke (d₂) von 0,35 mm bis 1,0 mm, insbesondere von 0,7 mm bis 1,0 mm, aufweisen.

7. Spike (1) nach einem der Ansprüche 1 bis 6, **dadurch gekennzeichnet, dass** die Umhüllungsschicht (5) entlang jener Längs- und Schmalseiten des Fußteiles (4a), an welchen kein Umhüllungsschichtpolster (9) gebildet ist, eine Dicke aufweist, die geringer ist als die größte Dicke (d₂) des/der Umhüllungsschichtpolster(s) (9).

8. Spike (1) nach einem der Ansprüche 1 bis 7, **dadurch gekennzeichnet, dass** der Endabschnitt (3a) des Spikepins (3) quer zu den Längsseiten des Fußflansches (6) und des Fußteiles (4a) langgestreckt ist und zwei sich in Richtung der Längsseiten erstreckende ungleich lange Griffkanten (10a₁, 10a₂) aufweist, wobei die längere Griffkante (10a₁) jene ist, die der Längsseite, an welcher das/die Umhüllungsschichtpolster (9) ausgebildet ist bzw. sind, näherliegt.

9. Fahrzeugluftreifen mit einem Laufstreifen mit Spikes (1) gemäß einem oder mehreren der Ansprüche 1 bis 8, **dadurch gekennzeichnet, dass** die Spikes (1) im Laufstreifen derart positioniert sind, dass in jeder Laufstreifenhälfte sich die Umhüllungsschichtpolster (9) im Fußflansch (6) jeweils näher zum benachbarten Laufstreifenrand befinden.

10. Spike (1') nach einem der Ansprüche 1 bis 3, **dadurch gekennzeichnet, dass** der Fußteil (4'a) den Längs- und Schmalseiten des Fußflansches (6') zugeordnete Längs- und Schmalseiten mit nach außen gerundeten Begrenzungsflächen (8'a₁, 8'a₂) an den Schmalseiten aufweist, wobei zumindest eine dieser Begrenzungsflächen (8'a₁, 8'a₂) im Bereich ihres Rundungszentrums mit einem abgeflachten, in Draufsicht insbesondere gerade verlaufenden Abschnitt (12a₁, 12a₂) versehen ist, sodass die Umhüllungsschicht (5') zur Außenfläche des Fußflansches (6) ein Umhüllungsschichtpolster (9') bildet.

11. Spike (1') nach Anspruch 10, **dadurch gekennzeichnet, dass** die Schmalseiten des Fußflansches (6') und des Fußteiles (4a') ungleich breit sind, wobei der Fußteil (4'a) zumindest an seiner breiteren Schmalseite im Bereich des Rundungszentrums mit einem abgeflachten, in Draufsicht insbesondere gerade verlaufenden Abschnitt (12a₂) versehen ist, welcher vorzugsweise eine Länge von 2,0 mm bis 3,0 mm aufweist.

12. Spike (1') nach Anspruch 10 oder 11, **dadurch gekennzeichnet, dass** das Umhüllungsschichtpolster (9') eine größte Dicke (d₅) von 0,5 mm bis 1,0 mm, insbesondere 0,7 mm bis 1,0 mm aufweist.

13. Spike (1') nach einem der Ansprüche 10 bis 12, **dadurch gekennzeichnet, dass** jede der nach außen gerundeten Begrenzungsflächen (8'a₁, 8'a₂) an den Schmalseiten im Bereich ihres Rundungszentrums mit einem abgeflachten, in Draufsicht gerade verlaufenden Abschnitt (12a₁, 2a₂) versehen ist, wobei das Umhüllungsschichtpolster (9') an der Schmalseite mit der größeren Breite eine größere Dicke an seiner dicksten Stelle aufweist als das Umhüllungsschichtpolster (9') an der Schmalseite mit der geringeren Breite.

14. Spike (1') nach einem der Ansprüche 10 bis 13, **dadurch gekennzeichnet, dass** der Fußteil (4'a) an seinen Längsseiten konkav nach innen gebogen verlaufende Begrenzungsflächen (8'b) aufweist.

15. Spike (1') nach Anspruch 14, **dadurch gekennzeichnet, dass** die Umhüllungsschicht (5') an den konkav nach innen gebogen verlaufenden Begrenzungsflächen (8'b) in Draufsicht gerade verlaufende Außenflächen und eine variierende Schichtdicke (d₆) von insbesondere 0,2 mm bis 0,4 mm aufweist.

16. Spike (1') nach einem der Ansprüche 1 bis 3 oder 10 bis 15, **dadurch gekennzeichnet, dass** der Endabschnitt (3'a) des Spikepins (3') in Draufsicht quer zu den Längsseiten des Fußflansches (6') und des Fußteiles (4'a) langgestreckt ist und zu den Schmalseiten des Fußteiles (4'a) ungleich lange Griffkanten (13a₁, 13a₂) aufweist, wobei die kürzere Griffkante (13a₂) jene ist, die dem Umhüllungsschichtpolster (9') an der Schmalseite bzw., falls an beiden Schmalseiten Umhüllungsschichtpolster (9') ausgebildet sind, dem dickeren Umhüllungsschichtpolster (9') näher liegt.

17. Fahrzeugluftreifen mit einem Laufstreifen mit Spikes (1') gemäß einem oder mehreren der Ansprüche 1 bis 3 oder 10 bis 16, **dadurch gekennzeichnet, dass** die Spikes (1') im Laufstreifen derart positioniert sind, dass das bzw. die Umhüllungsschichtpolster (9') der Umfangsrichtung des Reifens zugeordnet bzw. zugewandt ist bzw. sind.

## Claims

1. Stud (1, 1') for anchoring in a stud hole of a tread of a pneumatic vehicle tire, having a stud body (2, 2') which is composed of a nonmetallic, elastic material, in particular a rubber material, and which comprises a base flange (6, 6'), and having a stud pin (3, 3'), which stud pin is composed of hard metal and is anchored in an insert (4, 4') which is situated within the stud body (2, 2') and which comprises a base part (4a, 4'a), and which stud pin projects with an end portion (3a, 3'a) beyond the stud body (2, 2'), wherein the base part (4a, 4'a) together with an enveloping layer (5, 5') composed of the material of the stud body (2, 2') forms the base flange (6, 6') of the stud body (2, 2'), and wherein the base flange (6, 6') has an outer contour which is designed symmetrically with respect to at least one plane of symmetry (S₁, S₂) and which, in plan view, has two longitudinal sides and two narrow sides,
**characterized**
**in that** the outer contour of the base part (4a, 4'a) differs geometrically from that of the base flange (6, 6'), such that the enveloping layer (5, 5') has, at that side of the base part (4a, 4'a) which is assigned to a longitudinal side and/or to a narrow side, at least one portion in which said enveloping layer is thicker than at the opposite side of the base part (4a, 4'a).

2. Stud (1, 1') according to Claim 1, **characterized in that** the portion in which the enveloping layer (5, 5') has a relatively large thickness forms an enveloping layer cushion (9, 9').

3. Stud (1, 1') according to Claim 1 or 2, **characterized in that** the base flange (6, 6') has outer surfaces which, in plan view, run in a straight manner along the longitudinal sides of said base flange and run in an outwardly curved manner along the narrow sides of said base flange.

4. Stud (1) according to any of Claims 1 to 3, **characterized in that** the base part (4a) has longitudinal and narrow sides which are assigned to the longitudinal and narrow sides of the base flange (6) and which have outwardly rounded delimiting surfaces (8a) at the narrow sides and, along one longitudinal side, two delimiting surfaces (8c₁, 8c₂) which run at an obtuse internal angle (α) with respect to one another, such that the enveloping layer (5) forms, to the outer surface of the base flange (6), two enveloping layer cushions (9) which are preferably triangular in plan view.

5. Stud (1) according to Claim 4, **characterized in that** the obtuse internal angle (α) between the delimiting surfaces (8c₁, 8c₂) amounts to 150° to 170°.

6. Stud (1) according to Claim 4, **characterized in that** the enveloping layer cushions (9) have a greatest thickness (d₂) of 0.35 mm to 1.0 mm, in particular of 0.7 mm to 1.0 mm.

7. Stud (1) according to any of Claims 1 to 6, **characterized in that** the enveloping layer (5) has, along those longitudinal and narrow sides of the base part (4a) at which no enveloping layer cushion (9) is formed, a thickness which is smaller than the greatest thickness (d₂) of the enveloping layer cushion(s) (9).

8. Stud (1) according to any of Claims 1 to 7, **characterized in that** the end portion (3a) of the stud pin (3) is elongate transversely with respect to the longitudinal sides of the base flange (6) and of the base part (4a) and has two grip edges (10a₁, 10a₂) which extend in the direction of the longitudinal sides and which are of unequal length, wherein the longer grip edge (10a₁) is that which is closer to the longitudinal side at which the enveloping layer cushion(s) (9) is or are formed.

9. Pneumatic vehicle tire having a tread with studs (1) according to one or more of Claims 1 to 8, **characterized in that** the studs (1) are positioned in the tread such that, in each tread half, the enveloping layer cushions (9) in the base flange (6) are situated in each case closer to the adjacent tread edge.

10. Stud (1') according to any of Claims 1 to 3, **characterized in that** the base part (4'a) has longitudinal and narrow sides which are assigned to the longitudinal and narrow sides of the base flange (6') and which have outwardly rounded delimiting surfaces (8'a₁, 8'a₂) at the narrow sides, wherein at least one of said delimiting surfaces (8'a₁, 8'a₂) is, in the region of its rounding center, equipped with a flattened portion (12a₁, 12a₂) which runs in particular in a straight manner in plan view, such that the enveloping layer (5') forms an enveloping layer cushion (9') to the outer surface of the base flange (6).

11. Stud (1') according to Claim 10, **characterized in that** the narrow sides of the base flange (6') and of the base part (4a') are of unequal width, wherein the base part (4'a) is, at least at its wider narrow side, in the region of the rounding center, equipped with a flattened portion (12a₂) which runs in particular in a straight manner in plan view and which preferably has a length of 2.0 mm to 3.0 mm.

12. Stud (1') according to Claim 10 or 11, **characterized in that** the enveloping layer cushion (9') has a greatest thickness (d₅) of 0.5 mm to 1.0 mm, in particular 0.7 mm to 1.0 mm.

13. Stud (1') according to any of Claims 10 to 12, **characterized in that** each of the outwardly rounded delimiting surfaces (8'a₁, 8'a₂) is, at the narrow sides, in the region of its rounding center, equipped with a flattened portion (12a₁, 2a₂) which runs in a straight manner in plan view, wherein the enveloping layer cushion (9') at the narrow side with the greater width has a greater thickness at its thickest point than the enveloping layer cushion (9') at the narrow side with the smaller width.

14. Stud (1') according to any of Claims 10 to 13, **characterized in that** the base part (4'a) has, at its longitudinal sides, delimiting surfaces (8'b) which run in a concavely inwardly curved manner.

15. Stud (1') according to Claim 14, **characterized in that** the enveloping layer (5') has, at the delimiting surfaces (8'b) which run in a concavely inwardly curved manner, outer surfaces which run in a straight manner in plan view and a varying layer thickness (d₆) of in particular 0.2 mm to 0.4 mm.

16. Stud (1') according to any of Claims 1 to 3 or 10 to 15, **characterized in that** the end portion (3'a) of the stud pin (3') is, in plan view, elongate transversely with respect to the longitudinal sides of the base flange (6') and of the base part (4'a) and has grip edges (13a₁, 13a₂) of unequal length in relation to the narrow sides of the base part (4'a), wherein the shorter grip edge (13a₂) is that which is situated closer to the enveloping layer cushion (9') at the narrow side or, if enveloping layer cushions (9') are formed at both narrow sides, to the thicker enveloping layer cushion (9').

17. Pneumatic vehicle tire having a tread with studs (1') according to one or more of Claims 1 to 3 or 10 to 16, **characterized in that** the studs (1') are positioned in the tread such that the enveloping layer cushion(s) (9') is or are assigned to, or face(s) toward, the circumferential direction of the tire.

## Revendications

1. Crampon (1, 1') destiné à être ancré dans un trou de crampon d'une bande de roulement d'un pneumatique de véhicule, muni d'un corps de crampon (2, 2') comprenant une bride de base (6, 6'), en un matériau élastique non métallique, notamment un matériau de caoutchouc, et une tige de crampon (3, 3') en métal dur, qui est ancrée dans un insert (4, 4') se trouvant à l'intérieur du corps de crampon (2, 2'), comprenant une partie de base (4a, 4'a), et dépasse avec une section d'extrémité (3a, 3'a) du corps de crampon (2, 2'), la partie de base (4a, 4'a) formant, conjointement avec une couche d'enveloppe (5, 5') du matériau du corps de crampon (2, 2'), la bride de base (6, 6') du corps de crampon (2, 2'), et la bride de base (6, 6') présentant un contour extérieur, qui est configuré symétriquement au regard d'au moins un plan de symétrie (S₁, S₂), et présentant en vue de dessus deux grands côtés et deux petits côtés,
**caractérisé en ce que**
le contour extérieur de la partie de base (4a, 4'a) diffère géométriquement de celui de la bride de base (6, 6'), de telle sorte que la couche d'enveloppe (5, 5') présente, sur le côté de la partie de base (4a, 4'a) associé à un grand côté et/ou à un petit côté, au moins une section dans laquelle elle est plus épaisse que le côté opposé de la partie de base (4a, 4'a).

2. Crampon (1, 1') selon la revendication 1, **caractérisé en ce que** la section dans laquelle la couche d'enveloppe (5, 5') présente une plus grande épaisseur forme un rembourrage de couche d'enveloppe (9, 9') .

3. Crampon (1, 1') selon la revendication 1 ou 2, **caractérisé en ce que** la bride de base (6, 6') présente en vue de dessus le long de ses grands côtés des surfaces extérieures s'étendant sous forme droite et le long de ses petits côtés des surfaces extérieures s'étendant sous forme incurvée vers l'extérieur.

4. Crampon (1) selon l'une quelconque des revendications 1 à 3, **caractérisé en ce que** la partie de base (4a) présente des grands côtés et des petits côtés associés aux grands côtés et aux petits côtés de la bride de base (6) avec des surfaces de délimitation (8a) arrondies vers l'extérieur sur les petits côtés et, le long d'un grand côté, deux surfaces de délimitation (8c₁, 8c₂) s'étendant l'une par rapport à l'autre à un angle intérieur obtus (a), de telle sorte que la couche d'enveloppe (5) forme deux rembourrages de couche d'enveloppe (9), de préférence triangulaires en vue de dessus, jusqu'à la surface extérieure de la bride de base (6).

5. Crampon (1) selon la revendication 4, **caractérisé en ce que** l'angle intérieur obtus (a) entre les surfaces de délimitation (8c₁, 8c₂) est de 150° à 170°.

6. Crampon (1) selon la revendication 4, **caractérisé en ce que** les rembourrages de couche d'enveloppe (9) présentent une épaisseur maximale (d₂) de 0,35 mm à 1,0 mm, notamment de 0, 7 mm à 1,0 mm.

7. Crampon (1) selon l'une quelconque des revendications 1 à 6, **caractérisé en ce que** la couche d'enveloppe (5) présente, le long des grands côtés et des petits côtés de la partie de base (4a) sur lesquels aucun rembourrage de couche d'enveloppe (9) n'est formé, une épaisseur qui est inférieure à l'épaisseur maximale (d₂) du/des rembourrage(s) de couche d'enveloppe (9).

8. Crampon (1) selon l'une quelconque des revendications 1 à 7, **caractérisé en ce que** la section d'extrémité (3a) de la tige de crampon (3) est allongée perpendiculairement aux grands côtés de la bride de base (6) et de la partie de base (4a), et comprend deux bord de préhension (10a₁, 10a₂) de longueur inégale s'étendant dans la direction des grands côtés, le plus long bord de préhension (10a₁) étant celui qui se situe le plus près du grand côté sur lequel le/les rembourrage (s) de couche d'enveloppe (9) est ou sont formé(s).

9. Pneumatique de véhicule muni d'une bande de roulement à crampons (1) selon une ou plusieurs des revendications 1 à 8, **caractérisé en ce que** les crampons (1) sont positionnés dans la bande de roulement de telle sorte que, dans chaque moitié de bande de roulement, les rembourrages de couche d'enveloppe (9) dans la bride de base (6) se trouvent à chaque fois plus près du bord de bande de roulement voisin.

10. Crampon (1') selon l'une quelconque des revendications 1 à 3, **caractérisé en ce que** la partie de base (4'a) présente des grands côtés et des petits côtés associés aux grands côtés et aux petits côtés de la bride de base (6'), avec des surfaces de délimitation arrondies vers l'extérieur (8'a₁, 8'a₂) sur les petits côtés, au moins une de ces surfaces de délimitation (8'a₁, 8'a₂) étant munie, dans la zone de son centre d'arrondissement, d'une section aplatie (12a₁, 12a₂), s'étendant notamment sous forme droite en vue de dessus, de telle sorte que la couche d'enveloppe (5') forme un rembourrage de couche d'enveloppe (9') jusqu'à la surface extérieure de la bride de base (6).

11. Crampon (1') selon la revendication 10, **caractérisé en ce que** les petits côtés de la bride de base (6') et de la partie de base (4a') sont de largeur inégale, la partie de base (4'a) étant munie, au moins sur son petit côté le plus large, dans la zone du centre d'arrondissement, d'une section aplatie (12a₂), s'étendant notamment sous forme droite en vue de dessus, qui présente de préférence une longueur de 2,0 mm à 3,0 mm.

12. Crampon (1') selon la revendication 10 ou 11, **caractérisé en ce que** le rembourrage de couche d'enveloppe (9') présente une épaisseur maximale (d₅) de 0,5 mm à 1,0 mm, notamment de 0, 7 mm à 1,0 mm.

13. Crampon (1') selon l'une quelconque des revendications 10 à 12, **caractérisé en ce que** chacune des surfaces de délimitation arrondies vers l'extérieur (8'a₁, 8'a₂) est munie, sur les petits côtés, dans la zone de leur centre d'arrondissement, d'une section aplatie (12a₁, 12a₂), s'étendant sous forme droite en vue de dessus, le rembourrage de couche d'enveloppe (9') présentant sur le petit côté ayant la plus grande largeur une épaisseur plus grande à son point le plus épais que le rembourrage de couche d'enveloppe (9') sur le petit côté ayant la plus petite largeur.

14. Crampon (1') selon l'une quelconque des revendications 10 à 13, **caractérisé en ce que** la partie de base (4'a) comprend, sur ses grands côtés, des surfaces de délimitation (8'b) s'étendant sous forme incurvée concave vers l'intérieur.

15. Crampon (1') selon la revendication 14, **caractérisé en ce que** la couche d'enveloppe (5') présente, sur les surfaces de délimitation (8'b) s'étendant sous forme incurvée concave vers l'intérieur, des surfaces extérieures s'étendant sous forme droite en vue de dessus et une épaisseur de couche variable (d₆) de notamment 0,2 mm à 0,4 mm.

16. Crampon (1') selon l'une quelconque des revendications 1 à 3 ou 10 à 15, **caractérisé en ce que** la section d'extrémité (3'a) de la tige de crampon (3') est allongée en vue de dessus perpendiculairement aux grands côtés de la bride de base (6') et de la partie de base (4'a), et comprend des bords de préhension (13a₁, 13a₂) de longueur inégale vers les petits côtés de la partie de base (4'a), le bord de préhension le plus court (13a₂) étant celui qui se situe le plus près du rembourrage de couche d'enveloppe (9') sur le petit côté ou, si des rembourrages de couche d'enveloppe (9') sont formés sur les deux petits côtés, du rembourrage de couche d'enveloppe (9') le plus épais.

17. Pneumatique de véhicule muni d'une bande de roulement à crampons (1') selon une ou plusieurs des revendications 1 à 3 ou 10 à 16, **caractérisé en ce que** les crampons (1') sont positionnés dans la bande de roulement de telle sorte que le ou les rembourrages de couche d'enveloppe (9') est ou sont associé (s) à ou tourné(s) vers la direction circonférentielle du pneu.
